# FASCICULE DE BREVET EUROPEEN

(11) **EP 1 518 068 B1**
(45) Date de publication et mention de la délivrance du brevet: **25.04.2007**
(21) Numéro de dépôt: 03761614.1
(22) Date de dépôt: 11.06.2003
(51) Int. Cl.: F16L 15/08

(54) **JOINT FILETE TUBULAIRE RENFORCE POUR ETANCHEITE AMELIOREE APRES EXPANSION PLASTIQUE**
VERSTÄRKTE, RÖHRENFÖRMIGE VERBINDUNG ZUR VERBESSERTEN ABDICHTUNG NACH PLASTISCHER DEHNUNG
REINFORCED TUBULAR THREADED JOINT FOR IMPROVED SEALING AFTER PLASTIC EXPANSION

(30) Priorité: 28.06.2002 FR 0208080
(43) Date de publication de la demande: 30.03.2005
(73) Titulaire: VALLOUREC MANNESMANN OIL & GAS FRANCE, 59620 Aulnoye-Aymeries (FR)
(72) Inventeur: VERGER, Eric, F-59144 Gommegnies (FR); BRUNEAU, Albert, F-92100 Boulogne Billancourt (FR); DURAND, Antoine, F-59300 Valenciennes (FR)
(74) Mandataire: Plaçais, Jean Yves
(86) Numéro de dépôt international: PCT/FR2003/001744
(87) Numéro de publication internationale: WO 2004/003416

(56) Documents cités:
- WO-A-02/01102

## Description

L'invention concerne un joint tubulaire, notamment du genre utilisé pour des puits d'hydrocarbures ou pour des puits similaires, par exemple en géothermie.

Un tel joint peut exister entre deux tubes de grande longueur, ou entre un tube de grande longueur et un manchon. Ces joints sont utilisés notamment pour assembler des colonnes de tubes de cuvelage ("casings") ou de production ("tubings"). Compte tenu des caractéristiques mécaniques exigées, les tubes de cuvelage et ceux de production sont généralement en acier traité thermiquement.

De leur côté, les joints doivent tenir en traction, en compression, en flexion et parfois en torsion, ainsi qu'à de forts écarts de pression dans les deux sens entre l'intérieur et l'extérieur. Et ils doivent même être étanches aux gaz, au moins dans certains cas. Les joints filetés sont particulièrement avantageux à cet égard.

Mais il est actuellement envisagé de soumettre les tubes, in situ, à une expansion diamétrale, avec déformation plastique permanente. Ceci offre différents avantages, sur lesquels on reviendra. Encore faut-il que les joints restent opérationnels, après la déformation plastique d'expansion diamétrale, qu'ils subissent comme les tubes. Ainsi, il est souhaitable que les joints filetés tiennent après expansion diamétrale plastique, en conservant l'essentiel des propriétés qui les font apprécier, notamment de tenue mécanique en traction/compression, avec ou sans surpression interne ou externe, ainsi que d'étanchéité. Un joint reste étanche à des pressions de liquide et/ou de gaz d'autant plus importantes que la pression de contact entre les parties du joint est forte sur une largeur importante et sur toute la périphérie des surfaces en contact.

Les joints classiques ne donnent pas entière satisfaction: ou bien ils ne tiennent pas ces exigences, ou bien ils les tiennent de manière aléatoire, ou bien ils les tiennent, mais non de manière répétée.

Dans WO 02/01102, il est proposé une structure de joint prévue pour tenir l'expansion diamétrale plastique. Dans FR 02 00055, la demanderesse a également proposé une structure de joint améliorée pour tenir l'expansion diamétrale plastique.

La présente invention vient améliorer la situation et plus particulièrement l'étanchéité du joint fileté.

L'invention concerne un joint tubulaire fileté de hautes performances comprenant un premier élément tubulaire mâle et un second élément tubulaire femelle propres à être mutuellement assemblés par vissage de filetages respectifs conjugués. L'un au moins des premier et second éléments tubulaires comporte une lèvre non filetée s'étendant entre son filetage et son extrémité libre et présentant une surface d' étanchéité propre à être en contact étanche avec la surface en regard de l'autre élément après vissage, expansion diamétrale puis génération de forces de retour élastique des premier et second éléments tubulaire.

Selon une caractéristique principale, le joint tubulaire comprend une manchette tubulaire propre à être enfilée avant vissage sur le second élément, à être positionnée pour s'étendre axialement essentiellement en regard de ladite lèvre et, après expansion diamétrale, à engendrer une force de retour élastique qui s'ajoute à celle du second élément pour contrarier la force de retour élastique du premier élément en réalisant de ce fait au moins le frettage du second élément par la manchette tubulaire.

Selon une réalisation avantageuse, la lèvre non filetée du premier élément comprend une languette en extrémité propre à être engagée en butée dans une rainure correspondante du second élément après vissage et avant expansion. La lèvre non filetée est également propre à être maintenue par la languette dans la rainure durant l'expansion diamétrale.

Avantageusement, la surface d'étanchéité de la lèvre et la surface en regard sont cylindriques et sont disposées à faible jeu l'une de l'autre après vissage et avant expansion diamétrale.

Selon une autre réalisation, la surface d'étanchéité de la lèvre et la surface en regard sont propres à interférer radialement l'une contre l'autre après vissage et avant expansion diamétrale.

Selon une première variante de réalisation, chacun des premier et second éléments tubulaires comporte une lèvre non filetée s'étendant entre son filetage et son extrémité libre et présentant une surface d'étanchéité propre à être en contact étanche avec la surface en regard de l'autre élément après vissage, expansion diamétrale puis génération de forces de retour élastique des premier et second éléments tubulaires. Dans cette réalisation, le joint tubulaire comprend deux manchettes tubulaires propres à être enfilées avant vissage sur le second élément, à être positionnées pour s'étendre axialement essentiellement en regard desdites lèvres respectivement et à engendrer une force de retour élastique qui s'ajoute à celle du second élément pour contrarier la force de retour élastique du premier élément en réalisant de ce fait au moins le frettage du second élément par la manchette tubulaire.

Dans une seconde variante de réalisation, les deux manchettes sont reliées entre elles par une entretoise ayant une section transversale inférieure à celle des manchettes, les manchettes et l'entretoise étant réalisées en une seule pièce.

Avantageusement, l'entretoise tubulaire présente une épaisseur radiale inférieure à celle des manchettes.

Selon une réalisation de l'invention, chaque manchette tubulaire a une longueur de recouvrement environ égale à la longueur de la lèvre en regard optionnellement additionnée d'au plus 8 pas desdits filetages.

Avantageusement, chaque manchette est centrée sur la lèvre en regard.

Dans une réalisation avantageuse, la manchette tubulaire s'étendant en regard de la lèvre du second élément comprend une saillie radiale propre à venir au contact d'une surface radiale située à l'extrémité du second élément et propre à faciliter le positionnement de la manchette tubulaire.

Préférentiellement, la manchette tubulaire est maintenue en position par rapport au second élément par collage d'au moins une partie des surfaces du second élément et de la manchette en regard.

La manchette tubulaire est positionnée axialement sur le second élément au moyen d'un frettage au moins par refroidissement du second élément et /ou par chauffage de la manchette tubulaire.

Pour faciliter le positionnement de la manchette tubulaire, le second élément comprend une marque située sur sa surface périphérique extérieure. Dans une réalisation possible, la marque est une gorge peu profonde effectuée sur le second élément.

Préférentiellement, l'épaisseur radiale de la manchette tubulaire est au moins égale à 1,5 mm.

Le matériau de la manchette tubulaire possède une limite élastique supérieure à la limite élastique du matériau des premier et second éléments. De plus, la limite élastique de la manchette tubulaire est réglée par traitement thermique.

L'invention concerne également un procédé de réalisation d'un joint fileté tubulaire étanche à partir d'un joint fileté tubulaire dit "joint fileté tubulaire initial". On fait subir à ce joint fileté initial une expansion diamétrale dans le domaine des déformations plastiques à l'aide d'un boulet d'expansion de diamètre supérieur au diamètre intérieur desdits éléments tubulaires, qui est déplacé axialement dans le joint fileté, la ou chaque manchette engendrant, après expansion, une force de retour élastique qui s'ajoute à celle du second élément dans la région qu'elle recouvre.

L'invention concerne également un joint tubulaire étanche de hautes performances, tel qu'on peut l'obtenir par le procédé de l'invention, comprenant un premier élément tubulaire mâle et un second élément tubulaire femelle mutuellement assemblés par vissage de filetages respectifs conjugués. L'un au moins des premier et second éléments tubulaires comporte une lèvre non filetée s'étendant entre son filetage et son extrémité libre et présentant une surface d'étanchéité en contact étanche avec la surface en regard de l'autre élément. Le joint comprend en outre une manchette tubulaire entourant avec serrage le second élément et s'étendant axialement essentiellement en regard de ladite lèvre.

Les figures ci-après illustrent des modes de réalisation de l'invention:
- la figure 1 représente un joint fileté du type auquel s'applique l'invention,
- la figure 2 représente l'élément mâle du joint fileté de la figure 1,
- la figure 3 représente l'élément femelle du joint fileté de la figure 1,
les figures 4 à 7 représentent le joint fileté du type auquel s'applique l'invention à diverses étapes du processus d'expansion,

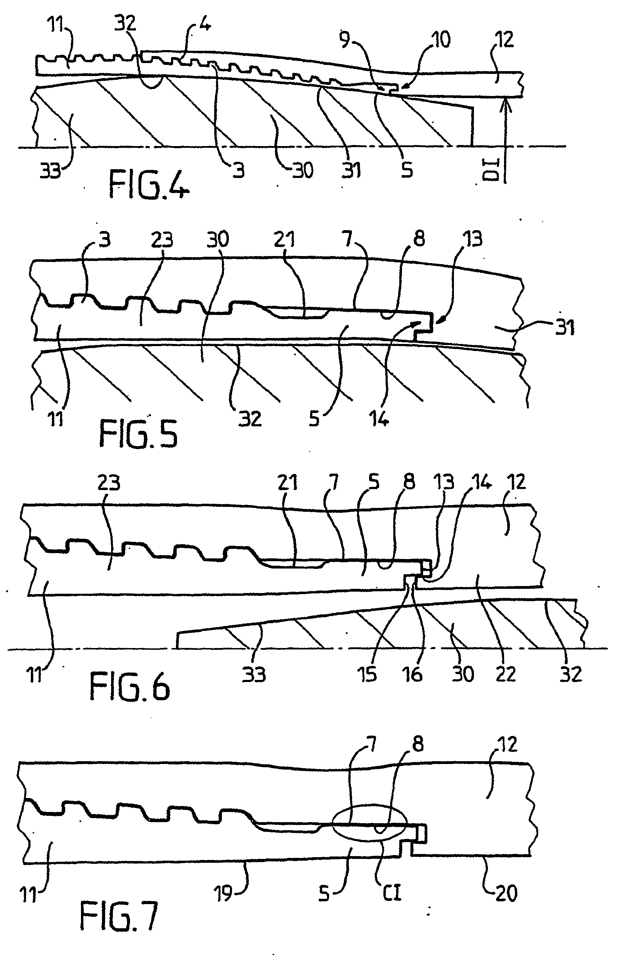

- la figure 4 représente la phase d'expansion du joint fileté,
- la figure 5 représente la phase de flexion,
- la figure 6 représente la phase de redressement,
- la figure 7 représente l'état final du joint fileté ayant subi le processus d'expansion,

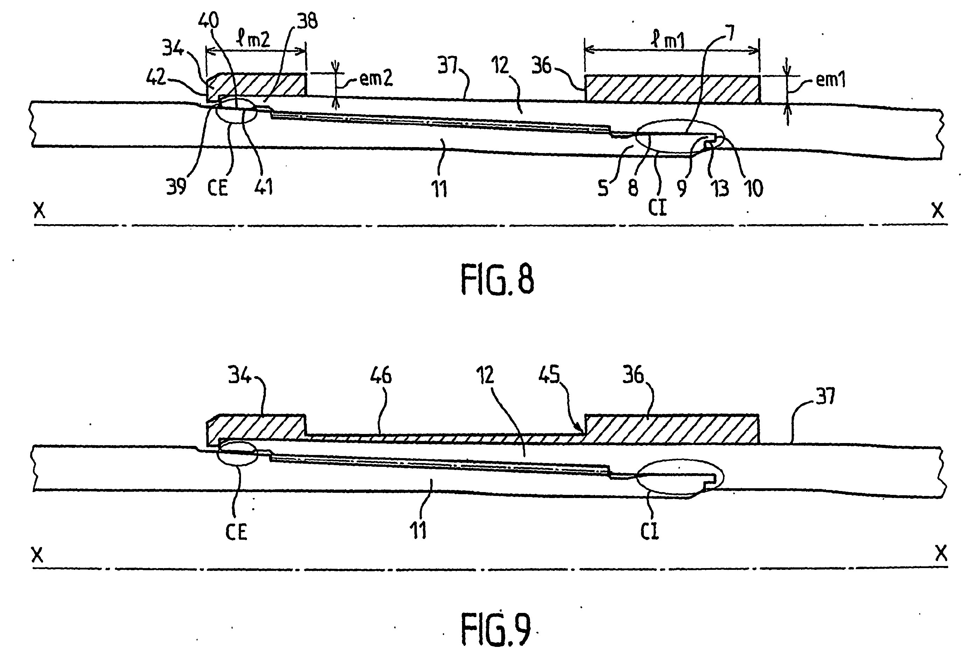

- la figure 8 représente un joint fileté avant expansion comprenant un exemple de manchettes selon l'invention,
- la figure 9 représente le joint fileté après expansion comprenant un exemple de manchettes selon l'invention.

Les dessins contiennent, pour l'essentiel, des éléments de caractère certain. Ils pourront donc non seulement servir à mieux faire comprendre la description, mais aussi contribuer à la définition de l'invention, le cas échéant.

L'annexe I présente les résultats d'une étude comparative sur l'étanchéité d'un joint de référence et de joints filetés selon l'invention.

On revient ici sur le forage de puits, pour hydrocarbures ou géothermie par exemple.

Traditionnellement, le haut d'un puits est d'abord foré sur une profondeur relativement faible de quelques dizaines de mètres à l'aide d'un outil de gros diamètre, de l'ordre par exemple de 500 mm, et est cuvelé à l'aide d'une colonne de tubes de ce diamètre. Le diamètre de forage diminue ensuite par pas jusqu'au fond du puits qui peut être foré avec un diamètre nettement plus faible, de l'ordre de 150 mm dans le même exemple. Un tel puits est alors cuvelé à l'aide de plusieurs colonnes de tubes concentriques, descendues chacune en fin de forage au diamètre correspondant et toutes suspendues depuis la surface; les tubes de plus gros diamètre s'étendent depuis la surface jusqu'à quelques dizaines de mètres de profondeur et les tubes de plus petit diamètre s'étendent depuis la surface jusqu'au fond du puits, dont la profondeur peut atteindre plusieurs milliers de mètres. L'espace entre les tubes de cuvelage et le terrain est par exemple cimenté.

Après que le puits est entièrement foré et cuvelé, une colonne de tubes de production peut être descendue pour permettre notamment la remontée des hydrocarbures jusqu'à la surface, c'est-à-dire l'exploitation effective du puits. On comprend que cette colonne de tubes de production possède un diamètre extérieur légèrement inférieur au diamètre intérieur de la colonne de tubes de cuvelage.

Équiper un puits conduit donc à mettre en oeuvre un grand nombre de tubes de différentes dimensions le plus souvent assemblés à l'aide de joints filetés compte tenu des avantages de ce type d'assemblage. On cherche à rendre ces tubes les plus minces possibles, pour ne pas nécessiter de trop gros diamètres de tubes de cuvelage près de la surface. Or le respect des contraintes et spécifications applicables aux joints filetés conduit souvent à leur donner une épaisseur plus grande que celle de la partie courante des tubes; ce qui oblige à augmenter la progression diamétrale entre colonnes concentriques, lorsqu'on descend en profondeur dans le puits.

L'assemblage des tubes entre eux a lieu soit par vissage des extrémités filetées des tubes les unes dans les autres (joints dits intégraux), soit à l'aide de manchons filetés recouvrant leurs extrémités. Les tubes sont descendus successivement après vissage dans l'extrémité du tube ou du manchon précédent.

La spécification API 5 CT de l'American Petroleum Institute (API) définit ainsi des joints filetés tubulaires entre deux tubes de grande longueur ("integral-joint tubing", "extreme-ligne casing"), ainsi que des assemblages filetés manchonnés comportant deux joints filetés permettant d'assembler deux tubes de grande longueur à l'aide d'un manchon. Ces joints API ne sont étanches que par l'adjonction d'une graisse chargée de particules métalliques qui remplit les interstices entre filets.

Bien entendu les liaisons entre tubes (ou entre tubes et manchons) doivent rester étanches quelles que soient les sollicitations que les tubes subissent lors de leur descente dans le puits, et dans une large limite de masse supportée, puisque chaque joint soutient au moins partiellement des tubes situés au-dessous de lui. Aussi les performances mécaniques des joints filetés apparaissent-elles intimement liées à leurs caractéristiques géométriques.

Un joint fileté est d'abord défini par une "efficacité" en traction déterminée par le rapport entre la section transversale du tube au droit du filetage et la section transversale du tube dans sa longueur.

En outre, lorsque la pression de fluide intérieure ou extérieure exercée sur les tubes devient excessive, les filetages peuvent désengrener surtout dans le cas de filetages à filets triangulaires arrondis. C'est pourquoi on préfère généralement mettre en oeuvre des filetages trapézoïdaux.

Ceci étant, quel que soit le type de filetage utilisé, il existe toujours, malgré l'utilisation de graisses chargées de particules, un canal de fuite dans lequel un fluide à haute pression peut circuler du fait du jeu existant entre les surfaces non en contact. Pour une charge donnée en traction, il existe un seuil de pression du fluide, au-delà duquel l'effort combiné de traction et pression provoque sur les joints filetés API un désengrènement des filetages des parties mâles et femelles en contact.

Les joints et assemblages filetés ont fait l'objet, pour éviter cela, de différents perfectionnements: par exemple les brevets FR 1489013, EP 0488912, US 4494777 ont visé à réaliser de.s joints filetés tubulaires dits supérieurs ou "premium" particulièrement étanches grâce à des portées d'étanchéité métal-métal et à des butées entre éléments mâles et femelles judicieusement arrangées.

Ceci peut se faire par deux portées d'étanchéité coniques en contact interférant, la portée d'étanchéité mâle étant disposée extérieurement au-delà du filetage mâle et la portée d'étanchéité femelle étant disposée de manière correspondante sur l'élément femelle. Des butées transversales sont utilisées conjointement pour positionner les portées d'étanchéité et pour renforcer leur efficacité.

Comme indiqué, après descente d'une colonne tubulaire dans un puits, on envisage de soumettre celle-ci à une expansion diamétrale, avec déformation plastique permanente. Ceci se fait par exemple à l'aide d'un boulet dont le passage est forcé à l'intérieur de la colonne: voir brevets ou demandes de brevet WO 93/25799, WO 98/00626, WO 99/06670, WO 99/35368, WO 00/61915, GB 2344606, GB 2348657. Ceci offre des potentialités très intéressantes:
- descendre une colonne de faible encombrement, qui est ensuite expansée à force;
- mettre en place de cette façon une colonne de tubes de cuvelage,
- de même, colmater in situ les trous d'un tube de cuvelage ou de production percé par la corrosion ou par le frottement des tiges de forage, ou bien descendre dans le puits dés tubes de faible encombrement qui seront expansés au diamètre souhaité une fois en place.
- enfin et surtout, permettre de forer des puits de diamètre uniforme sur toute leur longueur, dont le cuvelage est réalisé par une colonne de tubes tous de même diamètre, les tubes étant introduits à l'état non expansé, puis étant expansés in situ au diamètre du puits.

Il serait alors possible de diminuer fortement le nombre de tubes nécessaires pour équiper un puits, en supprimant les tubes de plus gros diamètre et de plus forte épaisseur. Le coût du puits est diminué en conséquence. Il peut même être envisagé de forer le puits directement avec la colonne de tubes de cuvelage, qui jouerait le rôle de train de tiges de forage.

Il s'est avéré que réaliser des joints filetés qui tiennent leurs performances après cette expansion est extrêmement délicat, d'autant plus que ceci doit être fiable (tous les joints doivent tenir) et stable dans les conditions de fonctionnement.

Il s'est avéré que les joints filetés tubulaires classiques tels que ceux selon le brevet US 4494777 ne supportent pas l'expansion diamétrale plastique. On constate après expansion sur ces joints:
- une absence d'étanchéité (qui empêche accessoirement de réaliser l'expansion en poussant hydrauliquement le boulet dans la colonne);
- une flèche de l'extrémité mâle vers l'intérieur du joint qui réduit considérablement et de manière inacceptable le diamètre intérieur opérationnel de la colonne en réalisant une saillie intérieure dans l'espace défini par le diamètre intérieur opérationnel;
- éventuellement la rupture de la lèvre d'extrémité mâle par dépassement de la capacité de déformation de certaines zones particulièrement sollicitées du fait des variations d'épaisseur tout au long des éléments mâles et femelles par rapport à l'épaisseur au corps du tube.

On a donc cherché à réaliser un joint fileté tubulaire qui soit apte à résister à l'opération d'expansion dans le puits et qui soit étanche aux liquides et aux gaz après ladite opération d'expansion. On a aussi cherché à ce que le joint fileté tubulaire soit simple et économique à produire. On a en outre cherché à ce que le joint fileté possède de bonnes caractéristiques métallurgiques en service donc après expansion, notamment à ce qu'il présente dans cet état une limite d'élasticité suffisante, à ce qu'il soit exempt de fragilité et à ce qu'il présente de bonnes caractéristiques à la fissuration sous contrainte par H2S.

On connaît des joints filetés ayant une lèvre mâle en correspondance avec un logement femelle (US 4611838, US 3870351, WO 99/08034, US 6047997). Il s'est avéré que ces montages connus ne tiennent pas l'étanchéité après expansion plastique, qui n'y est d'ailleurs nullement envisagée.

Dans US 4611838, la lèvre mâle présente une surface annulaire d'extrémité mâle comportant une dent annulaire; et il est prévu une surface annulaire d'épaulement femelle comportant une rainure annulaire. Pour la mise en butée, la lèvre mâle possède une surface périphérique extérieure torique et le logement femelle possède une surface périphérique intérieure conique. Ces surfaces périphériques interfèrent radialement en fin de vissage pour constituer des portées d'étanchéité. US 4611838 vise à maximaliser l'interférence radiale de la surface périphérique torique extérieure de la lèvre mâle avec la surface périphérique conique intérieure du logement femelle en fin de vissage (et par là même l'étanchéité du joint fileté) grâce à la forme de ces surfaces périphériques et à l'effet de support de la surface inférieure de la rainure pour la surface inférieure de la dent. Mais la surface d'extrémité mâle selon US 4611838 n'est pas bien maintenue en position dans celle de l'épaulement femelle du joint fileté et ne permet donc pas de transmettre un moment de flexion à l'extrémité libre de la lèvre mâle du fait de l'espace libre entre la paroi supérieure de la languette à l'extrémité libre de celle-ci et la paroi supérieure de la rainure au fond de celle-ci. L'étanchéité après expansion ne peut donc être garantie.

US 3870351 présente une configuration de lèvre et d'extrémité mâles et de logement femelle voisine de la configuration du brevet US 4611838, la surface d'extrémité libre mâle étant bombée convexe et portant contre une surface d'épaulement femelle bombée concave de manière à réaliser deux jeux de portées d'étanchéité métal-métal, l'un au niveau des surfaces bombées, l'autre jeu étant disposé sur la surface périphérique extérieure de lèvre mâle et sur la surface périphérique intérieure de logement femelle. Une telle configuration permet d'augmenter l'interférence radiale entre les portées d'étanchéité périphériques sur le joint vissé, ce qui n'est cependant pas suffisant pour l'application considérée (étanchéité après expansion).

WO 99/08034 décrit un joint fileté à filets carrés ayant une lèvre mâle en correspondance avec un logement femelle et présentant des surfaces annulaires d'extrémité mâle et d'épaulement femelle en forme de feuillures en butée et encastrées l'une dans l'autre. La surface périphérique extérieure de la lèvre mâle et la surface périphérique intérieure du logement femelle présentent des parties cylindriques qui interfèrent radialement entre elles pour former un jeu de portées d'étanchéité périphériques en fin de vissage lorsque les feuillures mâle et femelle sont encastrées. La configuration de ces surfaces est complexe et coûteuse à réaliser et n'offre aucune garantie d'étanchéité après expansion plastique. En outre, l'emprisonnement de graisse risque d'entraîner un mauvais positionnement des éléments filetés.

US 6047997 décrit enfin une structure de tiges de forage pour conduits souterrains pour lesquels il n'y a pas d'exigence particulière d'étanchéité. La surface d'extrémité mâle selon ce brevet est encastrée dans une surface d'épaulement femelle mais les figures font apparaître un espace important entre la surface périphérique extérieure de la lèvre mâle et la surface périphérique intérieure du logement femelle. Cela n'est pas satisfaisant non plus pour l'application considérée.

Dans la technique d'assemblage par expansion, chaque tube est abouté aux tubes déjà assemblés après être passé à l'intérieur des tubes qui le précèdent. Pour permettre ce passage, le diamètre de chaque tube déjà assemblé a subi une expansion de l'ordre de 10 à 25 % en commençant par le premier, par le passage d'un boulet de forme généralement conique tiré depuis la surface du puits. Cette expansion des tubes permet également d'améliorer l'étanchéité au niveau des surfaces en contact des joints.

Un mode de réalisation d'un joint d'étanchéité métal contre métal en forme de doigt adapté à cette technique est décrit dans WO 02/01102 précité. Un autre mode de réalisation est présenté dans la demande de brevet français non encore publiée FR 02 00055 précitée. Chacune de ces réalisation décrit un joint d'étanchéité propre à être expansé et, une fois expansé, présentant des zones d'étanchéité qui assurent une étanchéité au fluide, voire au gaz.

Une zone d'étanchéité est constituée de deux surfaces en contact soumises à des pressions de contact. Une zone d'étanchéité reste étanche à des pressions de liquide, voire de gaz, d'autant plus importantes que la pression de contact sur ces surfaces est forte. De plus, les dimensions de ces surfaces d'étanchéité (largueur et longueur) ont également une influence sur l'étanchéité. L'invention propose d'améliorer l'étanchéité de ces joints à des pressions de liquide et de gaz notamment en augmentant la pression de contact au niveau des zones d'étanchéité.

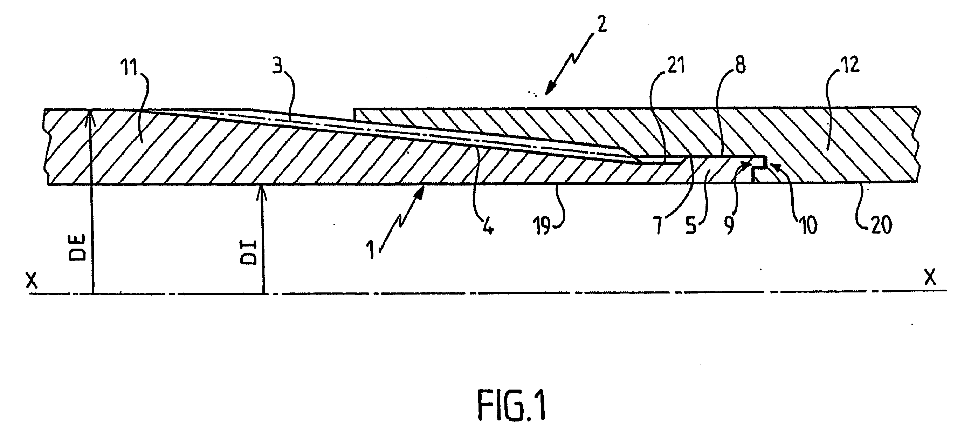

La figure 1 représente un joint comprenant un élément fileté mâle 1 disposé en extrémité d'un premier tube 11. Cet élément mâle est vissé en butée dans un élément fileté femelle 2 disposé en extrémité d'un second tube 12. Le diamètre intérieur de l'élément fileté mâle est ici égal au diamètre intérieur DI des tubes 11, 12. Dans le mode de réalisation de la figure 1, le diamètre extérieur de l'élément fileté femelle est égal au diamètre extérieur DE des tubes 11, 12 à titre d'exemple uniquement.

Le joint est représenté sur la figure 1 à l'état simplement vissé en butée avant toute opération d'expansion diamétrale.

Le second tube 12 tel que représenté est un tube de grande longueur. Ce second tube pourrait être, de manière non représentée, un manchon muni d'un côté de l'élément femelle 2 et de l'autre côté d'un second élément femelle symétrique ou non de ce dernier et vissé à un élément mâle situé en extrémité d'un autre tube de grande longueur.

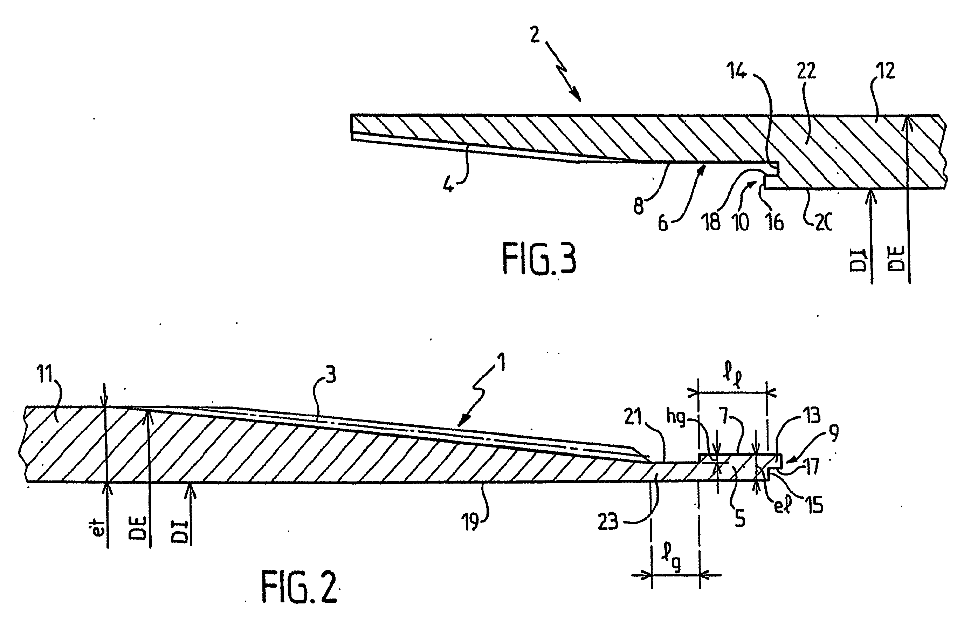

Seul l'élément mâle 1 est représenté sur la figure 2.

Il comprend un filetage mâle 3, conique à filets trapézoïdaux, et se prolonge vers son extrémité libre par une partie d'extrémité non filetée constituée par une gorge 21 et par une lèvre 5 et se termine par une surface annulaire d'extrémité mâle 9.

La gorge 21 possède une forme en U peu profonde.

Elle démarre immédiatement au-delà du filetage et sa profondeur h_{g} est inférieure à la hauteur des filets du filetage 3. De la sorte le fond de la gorge arrive au pied du premier filet du filetage.

La largeur de la gorge l_{g} est sensiblement égale à 4 fois sa profondeur h_{g}.

La lèvre 5-présente:
a) une surface périphérique extérieure 7 de forme cylindrique,
b) une surface périphérique intérieure 19 qui correspond à la zone d'extrémité de la surface périphérique intérieure cylindrique du premier tube 11.

La lèvre 5 possède donc une épaisseur e₁ uniforme sensiblement égale à la moitié de l'épaisseur eₜ du tube 11. Elle possède une longueur l₁ mesurée depuis l'extrémité de la gorge jusqu'à l'aplomb de la surface 15 (définie plus bas) sensiblement égale à 3 fois l'épaisseur de lèvre e₁.

La surface d'extrémité mâle 9 forme une feuillure. Cette feuillure est constituée d'une surface transversale annulaire mâle 15 et d'une languette 13 annulaire se projetant axialement, adjacente à la surface transversale 15. La surface transversale mâle 15 est située du côté de la feuillure dirigé vers l'intérieur du joint fileté.

La surface périphérique extérieure de la languette 13 est dans le prolongement de la surface 7 de la lèvre tandis que sa surface périphérique intérieure 17 est par exemple cylindrique.

L'épaisseur radiale de la languette 13 est sensiblement identique à celle de la surface transversale 15 tandis que la hauteur de la languette (ou projection axiale de celle-ci) est sensiblement égale à l'épaisseur radiale de cette même languette. Elle peut aussi être égale à 1,5 fois cette épaisseur radiale pour mieux maintenir l'extrémité libre de la languette lors de l'expansion.

L'élément femelle 2 est représenté seul à la figure 3.

Il comprend, en partant de l'extrémité libre de l'élément femelle, un filetage femelle 4 à filets trapézoïdaux homologue du filetage mâle 3 puis une partie non filetée 6. Cette partie non filetée 6 forme un logement pour correspondre et coopérer avec la lèvre 5 de l'élément mâle 1.

Le logement femelle 6 présente une surface périphérique 8 tournée vers l'intérieur, de forme cylindrique, reliée d'un côté au filetage femelle 4 et de l'autre côté via un épaulement femelle 10 à la surface périphérique intérieure cylindrique 20 du second tube 12.

De manière générale, le diamètre de la surface périphérique 8 du logement est très légèrement supérieur au diamètre de la surface périphérique extérieure 7 de la lèvre mâle 5. De cette façon, les surfaces 7 et 8 peuvent coulisser l'une dans l'autre à faible jeu lors du vissage de l'élément mâle dans l'élément femelle, par exemple avec un jeu de 0,2 mm. L'avantage d'un tel coulissement sera exposé plus loin.

L'épaulement femelle présente une surface annulaire d'épaulement 10 qui est disposée de manière sensiblement correspondante et possède une forme sensiblement homologue à celle d'extrémité mâle 9. La surface 10 forme une feuillure constituée d'une surface annulaire transversale femelle 16 et d'une rainure annulaire 14 adjacente à la surface transversale 16.

La surface transversale femelle 16 est située du côté de la feuillure dirigé vers l'intérieur du joint fileté.

La paroi 18 de la rainure 14 adjacente à la surface transversale 16 est par exemple cylindrique et peut se raccorder à cette dernière par un chanfrein ou un arrondi. La paroi opposée de la rainure est dans le prolongement de la surface périphérique 8. Lors du vissage du joint fileté, la surface 17 de la languette "monte" sur la paroi 18 de la rainure jusqu'à ce que l'extrémité libre transversale de la languette arrive contre le fond de la rainure 14. La hauteur axiale hᵣ de la languette 14 et la profondeur axiale Pᵣ de la rainure sont telles que les surfaces transversales 15 et 16 ne viennent en contact qu'après un vissage supplémentaire. Le faible jeu entre les surfaces cylindriques 7 et 8 et entre les surfaces de la languette et de la rainure qui les prolongent permet l'évacuation de la graisse en fin de vissage et donc un positionnement correct de la lèvre 5 par rapport au logement 6.

Les figures 4 à 7 explicitent les phénomènes de déformation qui se produisent lorsque l'on réalise au moyen d'un boulet une expansion diamétrale de l'ordre de 15 % sur des tubes assemblés par les joints filetés qui viennent d'être décrits et qui permettent d'obtenir en final un joint expansé étanche.

Une telle déformation effectuée sur des matériaux métalliques conduit à des déformations plastiques du métal.

On passe ainsi par exemple d'un diamètre extérieur de 139,7 mm (5,5 in) sur le deuxième tube 12 en amont de l'expansion et par conséquent dans la partie non encore déformée à un diamètre extérieur de 157,5 mm (6,2 in) sur le premier tube 11 expansé (à l'aplomb ou en aval du cône de sortie 33 du boulet). Il faut de ce fait utiliser pour les tubes un métal qui accepte de telles déformations plastiques.

Les déformations plastiques générées augmentent la limite d'élasticité des produits: un tube possédant initialement une limite d'élasticité de 310 MPa (45 KSI) voit ainsi celle-ci augmenter à 380 MPa (55 KSI) après déformation.

L'expansion diamétrale est réalisée de manière connue à l'aide d'un boulet 30 (figure 4) de diamètre maximal adéquat. On force le passage de ce boulet dans les tubes soit en le tirant à l'aide de tiges de forage soit en le poussant par exemple par une pression hydraulique.

Le boulet a par exemple une forme biconique avec un cône d'entrée 31 sur lequel se fait l'expansion, une partie cylindrique médiane 32 et une partie conique de sortie 33. Toutes les surfaces des parties de boulet sont raccordées entre elles par des rayons de raccordement adaptés.

WO 93/25800 divulgue notamment des angles de cônes d'entrée particulièrement adaptés à l'expansion diamétrale de tubes munis de fentes et dénommés EST (expandable slotted tubing) pour l'exploitation de puits d'hydrocarbures.

Les tubes 11, 12 ayant une section sensiblement constante, leurs extrémités ne posent pas de problème particulier lors du passage du boulet pourvu que la capacité de déformation du métal dont ils sont faits soit suffisante.

Le processus d'expansion du joint fileté peut être décomposé en 4 phases qui font l'objet des figures 4 à 7.

Bien que l'opération d'expansion puisse tout à fait être effectuée dans le sens contraire et conduire à des résultats adéquats, on a représenté le mode préféré de déformation dans lequel le boulet se déplace de l'élément mâle 1 du premier tube 11 vers l'élément femelle 2 du second tube 12.

### a) Phase d'expansion sur le cône du boulet

La figure 4 montre le joint fileté au cours de cette phase.

L'expansion est réalisée par le cône d'entrée 31 du boulet 30 et la figure 4 montre les filetages mâles 3 et femelles 4 en cours d'expansion diamétrale.

Sur la figure 4, le cône d'entrée 31 du boulet 30 amorce la déformation de la lèvre mâle et de la zone de logement homologue femelle en les pliant pour les incliner par rapport à l'axe de l'assemblage.

Au cours de cette phase d'expansion, les efforts de réaction au passage du boulet 30 sont progressivement transférés du premier tube 11 vers le deuxième tube 12.

Du fait de ces efforts de réaction, la lèvre mâle 5 est comprimée axialement au cours de cette phase d'expansion par la surface annulaire d'épaulement femelle 10.

La fin de la phase d'expansion correspond à l'arrivée de l'extrémité libre de l'élément mâle à la fin du cône d'entrée 31 du boulet.

### b) Phase de flexion

Au cours de cette phase, la lèvre mâle est située au niveau de la partie centrale 32 du boulet: voir figure 5.

### i) lèvre mâle

La lèvre mâle 5 est soumise à chacune de ses deux extrémités à des moments de flexion de sens opposés.

La surface d'extrémité mâle 9 est en effet maintenue en position dans la surface d'épaulement femelle 10 du fait des feuillures avec appuis 15, 16 et du système d'emprisonnement languette 13/rainure 14.

L'emprisonnement des feuillures oblige la zone d'extrémité libre de la lèvre mâle 5 à suivre l'inclinaison de la zone 22 de pleine épaisseur de l'élément femelle au-delà de l'épaulement. Cette zone 22 est encore en cours d'expansion sur le cône d'entrée 31 du boulet et crée donc un moment de flexion à ce niveau.

L'autre extrémité de la lèvre, du côté filetage mâle 3, n'est plus supportée et impose au contraire à la lèvre un moment de flexion opposé à celui en extrémité libre de lèvre.

Les moments de flexion de signe opposé aux 2 extrémités de la lèvre mâle entraînent la courbure en banane de la lèvre mâle 5 comme sur la figure 5, la surface périphérique extérieure 7 de la lèvre 5 prenant une forme bombée convexe.

L'état de compression axiale de la lèvre mâle 5 en fin de phase d'expansion facilite sa courbure sous l'effet des moments de flexion.

La gorge 21 située entre la lèvre mâle 5 et le filetage mâle 3 joue le rôle d'une rotule plastique qui accentue la courbure de la lèvre mâle en limitant la largeur sur laquelle cette courbure peut s'effectuer.

Il faut toutefois veiller dans ce cas à ce que les contraintes de compression axiale au niveau de la lèvre mâle n'induisent pas le flambement du métal 23 sous la gorge. Ce flambement se traduirait par une saillie du métal sous la gorge par rapport à la surface périphérique intérieure 19.

### ii) logement femelle

Le même phénomène de flexion se produit sur le logement femelle.

La zone 22 de pleine épaisseur relativement rigide par rapport aux zones de lèvre relativement minces subit à son passage au niveau de la partie médiane une expansion additionnelle de sorte que le diamètre intérieur de la zone 22 devient supérieur à celui de la zone médiane 32 du boulet. Le phénomène d'expansion additionnelle est décrit dans le document WO 93/25800.

### c) Phase de redressement

Cette phase illustrée par la figure 6 correspond au passage de la zone 22 de pleine épaisseur femelle sur la partie médiane 32 du boulet 30.

### i) logement femelle

La flexion générée dans la phase précédente tend à être ramenée à zéro sous l'effet de la tension et des contraintes circonférentielles, ce qui génère un état de contraintes axiales de flexion inverse par rapport à la courbure, produisant ainsi le redressement.

Le moment de flexion engendré par ces contraintes est proportionnel à l'épaisseur de matière en amont du redressement. Au moment d'arriver sur le tube 12 en pleine épaisseur (zone 22), le moment de flexion n'est pas suffisant pour redresser la zone périphérique intérieure du logement femelle qui tend à plonger alors vers l'axe du produit. Ce comportement se manifeste par une diminution locale de diamètre extérieur du tube 12.

### ii) lèvre mâle

Au fur et à mesure du redressement de la partie femelle, la différence d'encombrement axial qui était générée par la flexion diminue. La lèvre mâle 5 perd donc progressivement son état de compression. Cela se poursuit avec la séparation des surfaces 15, 16 initialement en butée. Ce phénomène est renforcé par "le plongeon" de la surface périphérique intérieure 8 du logement femelle qui produit un effet d'ouverture des butées 15, 16.

La déformation en banane imposée dans la phase précédente est conservée.

### d) État final

La figure 7 montre l'état final du joint fileté après le passage du boulet.

L'état de contraintes circonférentielles généré par l'expansion conduit à un frettage de la surface périphérique extérieure 7 de la lèvre mâle par celle intérieure 8 du logement femelle. On peut alors parler d'auto-frettage des surfaces 7, 8 du joint fileté à l'état expansé, ce qui permet d'assurer l'étanchéité. La lèvre mâle 5 ne plonge pas vers l'axe, car le déport radial imposé par l'emprisonnement des feuillures 9, 10 a généré suffisamment de déformations plastiques.

Le retour élastique des éléments du joint fileté après passage du boulet est négligeable devant les déformations plastiques mises en jeu.

Le frettage radial induit une pression de contact de plusieurs dizaines de MPa voire de plus de 100 MPa, suffisante pour assurer une étanchéité aux pressions intérieures ou extérieures au joint fileté. La longueur de frettage est suffisant sur toute la périphérie des surfaces de contact pour assurer une étanchéité stable entre celles-ci.

Une étanchéité est par ailleurs nécessaire lorsque l'expansion est réalisée en poussant hydrauliquement le boulet 30 sous une pression de 10 à 30 MPa, toute fuite au niveau des joints déjà expansés empêchant la pénétration du boulet plus avant dans la colonne et bloquant par conséquent le processus d'expansion.

Un jeu trop important entre surface périphérique 7 de la lèvre mâle 5 et surface périphérique 8 du logement femelle sur le joint fileté avant expansion ne permettrait pas le frettage de ces surfaces en fin d'opération d'expansion.

Une interférence radiale entre ces surfaces à l'état initial avant expansion est susceptible de gêner les déformations différentielles (courbure, redressement) entre ces surfaces lors des opérations d'expansion, déformations différentielles permettant de réaliser le frettage de ces surfaces en fin d'opération d'expansion. Elle risque aussi d'entraîner un grippage de ces surfaces lors du vissage et un mauvais positionnement des éléments avec un emprisonnement incorrect des surfaces 9 et 10 et par là un frettage médiocre des surfaces 7 et 8 après expansion.

Dans un mode de réalisation préféré, la forme en feuillure annulaire avec surfaces transversales 15, 16 et système languette 13/rainure 14 permet d'empêcher la plongée de l'extrémité libre mâle lors de l'expansion. D'autres modes de réalisation des surfaces encastrées 9, 10 sont possibles afin de donner le même résultat..

Une lèvre mâle 5 trop mince, d'épaisseur le inférieure au tiers de l'épaisseur et des tubes 11, 12 ne permet pas de réaliser une butée efficace au niveau des surfaces transversales 15, 16.

Si l'épaisseur e₁ de la lèvre mâle 5 est au contraire supérieure aux 2/3 de l'épaisseur et des tubes 11,12, l'épaisseur du tube 12 au niveau de la zone de logement femelle entraîne une section critique de filetage femelle 4 trop faible et par conséquent une résistance insuffisante à la traction des filetages.

Le rapport longueur/épaisseur de lèvre mâle 5 régit le comportement en compression et en flexion de la lèvre 5.

Une lèvre mâle 5 de longueur l₁ inférieure à son épaisseur le ne permet pas la flexion suffisante de la surface périphérique 7 de la lèvre mâle 5 et/ou le redressement de la surface périphérique 8 du logement femelle.

Une lèvre mâle 5 de longueur l₁ supérieure à 4 fois son épaisseur e₁ peut entraîner un flambement de la lèvre mâle et une saillie intérieure de celle-ci du côté filetage.

Cet effet est accentué par la présence d'une gorge 21 entre filetage mâle 3 et lèvre mâle 5.

C'est pourquoi la gorge a préférentiellement une profondeur limitée à une hauteur de filet et une longueur limitée par rapport à sa profondeur.

Une languette 13 d'épaisseur radiale insuffisante et de hauteur axiale inférieure à l'épaisseur radiale ne pourrait être maintenue suffisamment lors de l'expansion.

On se réfère à la figure 8 montrant un joint tubulaire après vissage des éléments tubulaires en partie filetés destiné à être expansé diamétralement selon l'invention.

Ce joint comprend les éléments tubulaires mâle 11 et femelle 12 comme présentés sur la figure 1. La partie d'extrémité du tube mâle comprend la lèvre 5 dont la surface périphérique 8 est propre à entrer en contact avec la surface périphérique 7 du logement femelle 8 du tube femelle 12 lors de l'expansion du joint. La zone de contact avec pression de contact entre les surfaces 7 et 8 après expansion est appelée zone d'étanchéité intérieure CI puisqu'elle est située vers l'intérieur du joint. Il existe également après expansion une zone de contact entre une surface de la languette de la lèvre mâle et une surface en regard de la rainure de l'élément tubulaire femelle.

Une manchette tubulaire 36 est disposée de façon concentrique à l'élément tubulaire femelle 12. Cette manchette tubulaire 36 présente un diamètre intérieur tel qu'il permette à cette manchette tubulaire d'être enfilée par un opérateur avant vissage des éléments tubulaires 11 et 12 sur l'élément tubulaire femelle 12 et d'être en contact avec la surface extérieure 37 de l'élément tubulaire 12. Cette manchette tubulaire s'étend sur toute sa longueur 1m1 pour recouvrir axialement la lèvre 5 et dépasser de part et d'autre de la lèvre 5, c'est-à-dire du côté du filetage et au-delà de la languette 13. La manchette tubulaire 36 est avantageusement centrée sur la lèvre.

En fin de vissage et avant expansion, la languette 13 est en butée axiale contre le fond de la rainure 14 et les surfaces d'étanchéité 7 et 8 sont cylindriques et disposées à faible jeu l'une de l'autre en fin de vissage. La lèvre 5 est maintenue durant l'expansion par le système d'emprisonnement languette 13/rainure 14.

Dans l'exemple, la manchette tubulaire 36 est constituée en un matériau identique à celui des éléments tubulaires dont la limite élastique est par exemple identique à la limite élastique du matériau de ces éléments tubulaires. Après expansion diamétrale, la manchette tubulaire génère une force de retour élastique qui vient s'additionner à celle de l'élément femelle et vient contrarier le retour élastique de l'élément mâle. Le frettage de l'élément femelle par la manchette tubulaire est ainsi réalisé. De plus, la différence de retour élastique entre d'une part l'élément mâle et d'autre part l'ensemble constitué de la manchette et de l'élément femelle provoque une mise en compression de l'élément femelle. Comme la manchette tubulaire 36 recouvre les surfaces 7 et 8 et légèrement au-delà, la compression se traduit par un accroissement de la pression de contact entre les surfaces d'étanchéité 7 et 8 des éléments mâle et femelle. Le frettage de l'élément mâle par l'élément femelle est également réalisé. La présence de la manchette tubulaire 36 requiert une énergie d'expansion à peine plus importante que sans manchette tubulaire (de l'ordre de 10%) et renforce considérablement la pression de contact au niveau de la zone d'étanchéité intérieure CI après expansion (de l'ordre de 200% pour une manchette d'épaisseur de 4 à 5 mm).

Dans l'exemple de réalisation présenté, avant expansion, la manchette tubulaire 36 est définie par
- une longueur de recouvrement 1m1 environ. égale au moins à la longueur de la lèvre l₁ additionnée d'environ 2 à 8 fois au maximum la largeur d'un filet du filetage,
- une épaisseur radiale em1 limitée entre une épaisseur radiale maximale donnée par l'encombrement maximal du joint et une épaisseur radiale minimale donnée par un trop faible effet de la manchette sur le retour élastique des éléments filetés : avantageusement, l'épaisseur radiale est d'environ quelques millimètres, par exemple au moins 1,5 mm et préférentiellement de l'ordre de 4 à 5 mm pour des tubes de diamètre extérieur de l'ordre de 150 mm et d'épaisseur 7 à 8 mm. L'épaisseur préférentielle de la manchette est sensiblement voisine de celle de la lèvre mâle. Après expansion, l'épaisseur radiale est au moins égale à 1 mm.

Dans une réalisation de l'invention, les surfaces 7 et 8 définissent la zone d'étanchéité dite intérieure CI du joint après expansion diamétrale. Toutefois, une autre zone d'étanchéité est constituée avant et après expansion diamétrale du joint d'étanchéité représenté sur la figure 8.

Ainsi, l'élément tubulaire femelle 12 comporte, entre son filetage et son extrémité libre, une lèvre femelle 38 non filetée. Cette lèvre femelle 38 présente une surface périphérique intérieure 41 se finissant par une surface radiale 39, formant une surface annulaire. L'élément tubulaire mâle 11 présente une surface périphérique extérieure 40 du côté du filetage mâle opposé à son extrémité libre. Après vissage complet des éléments tabulaires mâle et femelle, la surface périphérique intérieure 41 interfère radialement avec la surface périphérique extérieure 40 de l'élément tubulaire mâle 11 de manière à définir une zone d'étanchéité avant expansion. Les surfaces 40 et 41 sont toutes deux coniques et de conicité similaire. Lors de l'expansion, la lèvre femelle n'étant pas en butée axiale contre l'élément mâle, il n'y pas de phénomènes de flexion ou de contre-flexion comme dans le cas de la lèvre mâle en butée axiale contre l'élément femelle. Ainsi, la lèvre femelle ne plonge pas vers l'axe.
Après expansion se produit simplement un phénomène de retour élastique un peu plus important de la lèvre femelle 38 par rapport à l'élément mâle sous jacent. Ceci provoque un contact étanche entre la surface périphérique intérieure 41 de la lèvre femelle et la surface périphérique 40 homologue de l'élément tubulaire mâle 11. L'interférence en fin de vissage des surfaces 40 et 41 permet d'assurer le contact entre ces surfaces lors du retour élastique après expansion.

La zone de contact étanche entre ces surfaces 40 et 41 après expansion est appelée zone d'étanchéité extérieure CE puisqu'elle est située vers l'extérieur du joint.

En dehors de tout autre moyen, l'étanchéité extérieure créée au niveau de la zone CE est toutefois inférieure à celle créée au niveau de la zone CI.

Une manchette tubulaire 34 est disposée de façon concentrique à l'élément tubulaire femelle 12. Cette manchette tubulaire 34 présente un diamètre intérieur tel qu'il permette à cette manchette tubulaire d'être enfilée par un opérateur avant vissage des éléments tubulaires 11 et 12 sur l'élément tubulaire femelle 12 et d'être en contact avec la surface extérieure 37 de l'élément tubulaire 12. Cette seconde manchette tubulaire s'étend sur toute sa longueur 1m2 pour recouvrir axialement les surfaces périphériques 40 et 41 propres à définir la zone d'étanchéité avant et après expansion et dépasser de part et d'autre de ces surfaces, c'est-à-dire du côté du filetage et au-delà de la surface radiale 39. Dans l'exemple, la manchette tubulaire 34 est constituée en un matériau similaire à celui des éléments tubulaires et dont la limite élastique est par exemple égal à la limite élastique du matériau de ces éléments tubulaires. Après expansion diamétrale, la manchette tubulaire engendre une force de retour élastique qui s'ajoute à celle de l'élément femelle pour contrarier la force de retour élastique de l'élément mâle. Le frettage de l'élément femelle par la manchette tubulaire est ainsi réalisée. De plus, la différence de retour élastique entre la manchette et la surface intérieure de l'élément mâle provoque une mise en compression de l'élément femelle. Comme la manchette tubulaire 34 recouvre les surfaces 40 et 41 et légèrement au-delà, la compression se traduit par un accroissement de la pression de contact entre les surfaces d'étanchéité 40 et 41 des éléments mâle et femelle par rapport à un joint fileté similaire sans manchette 34. Le frettage de l'élément mâle par l'élément femelle est également réalisé. La présence de la manchette tubulaire 34 requiert une énergie d'expansion à peine plus important que sans manchette tubulaire et renforce considérablement la pression de contact au niveau de la zone d'étanchéité extérieure CE après expansion (de l'ordre de plus de 300%).

Dans l'exemple de réalisation présenté, avant expansion, la manchette tubulaire 34 est définie par
- une longueur de recouvrement 1m2 environ égale à la longueur axiale de la lèvre femelle 38 additionnée d'environ 2 à 8 fois au maximum la largeur d'un filet du filetage,
- une épaisseur em2 limitée entre une épaisseur maximale donné par l'encombrement maximal du joint et une épaisseur minimale donnée par un trop faible effet sur le retour élastique : avantageusement, l'épaisseur est d'environ quelques millimètres, par exemple au moins 1,5 mm et préférentiellement de 4 à 5 mm pour les tubes de diamètre extérieur d'environ 150 mm et d'épaisseur de 7 à 8 mm. Là encore, l'épaisseur de la manchette 34 est préférentiellement de même ordre de grandeur que celle de la lèvre femelle. Après expansion, l'épaisseur radiale est au moins égale à 1 mm.

Que ce soit pour la manchette 34 ou pour la manchette 36, il est apparu qu'une manchette courte formant discontinuité de matière par rapport aux éléments filetés mâle et femelle améliorait beaucoup plus les performances d'étanchéité, notamment d'étanchéité extérieure qu'une manchette longue rapportée ou qu'une simple sur-épaisseur de matière sur l'élément femelle à la place de la ou des manchettes. Un tel enseignement n'apparaissait absolument pas comme évident.

Diverses méthodes de montage des manchettes sont envisagées.

Dans un exemple de réalisation, la manchette tubulaire. 34 comprend une saillie radiale 42 à une de ses extrémités. Ainsi, avant vissage des éléments tubulaires 11 et 12, un opérateur enfile la manchette tubulaire 34 sur l'élément tubulaire 12 à partir de l'extrémité opposée à celle comprenant la saillie, la surface périphérique intérieure de la manchette étant en contact avec la surface périphérique extérieure 37. La manchette tubulaire 34 est enfilée jusqu'à ce que la saillie radiale 42 entre en contact avec la surface radiale 39. La manchette tubulaire 34 est ainsi positionnée axialement. La saillie radiale 42 peut avantageusement être collée contre la surface radiale 39 de manière à améliorer la pression de contact. Une "graisse-colle" peut être utilisée durcissant en quelques minutes en conditions anaérobie et permet de conserver le positionnement de la manchette tubulaire par rapport à l'élément femelle lors de l'expansion. La couche de colle peut être cisaillé et fissurée pendant l'expansion sans que cela ne présente d'inconvénient.

Dans une variante de réalisation, la manchette tubulaire 36 ou/puis 34 est(sont) enfilée(s) sur l'élément tubulaire 12 avant vissage par un opérateur puis positionnée(s) axialement grâce à la présence d'un marquage sur la surface périphérique extérieure 37 de l'élément tubulaire femelle 12, le marquage pouvant être une gorge peu profonde. La position axiale de ou des manchettes tubulaires 36 et/ou 34 peut être maintenue au moyen de la "graisse-colle" comme pour le cas de manchette avec saillie radiale. La position axiale de ou des manchettes tubulaires 36 et/ou 34 peut également être maintenue par un très léger frettage sur l'élément tubulaire femelle. Le frettage peut être réalisé par chauffage de la manchette et/ou par refroidissement de l'élément femelle.

L'épaisseur radiale d'une manchette tubulaire peut être diminuée au prix d'une moindre efficacité sur le renforcement de l'étanchéité créée par la manchette. Il est cependant possible pour des manchettes minces de compenser quelque peu leur perte d'efficacité en augmentant leur limite d'élastique par rapport à celle des éléments mâle et femelle 11 et 12. Plus la limite élastique de la manchette est supérieure à la limite élastique des éléments mâle et femelle, meilleure est l'étanchéité à épaisseur donnée. La limite élastique de la manchette tubulaire est propre à être modifiée par traitement thermique. Toutefois, la ductilité du matériau est généralement réduite par l'augmentation de la limite élastique . Un compromis peut être trouvé entre une ductilité qui doit rester suffisante pour pouvoir générer l'expansion diamétrale sans rompre la manchette tubulaire et une limite élastique suffisamment élevée pour garantir des performances d'êtanchéité suffisantes malgré l'épaisseur radiale limitée de la manchette tubulaire.

Si un élément tubulaire ne comprend qu'une zone d'étanchéité extérieure CE ou intérieure CI, cette zone d'étanchéité est propre à assurer l'étanchéité des fluides de l'intérieur vers l'extérieur comme de l'extérieur vers l'intérieur. Dans ce cas, les termes "zone d'étanchéité extérieure" et "zone d'étanchéité intérieur" permettent essentiellement de situer la zone d'étanchéité au niveau de l'extrémité libre de l'élément tubulaire mâle ou femelle.

En annexe I se trouvent répertoriés les performances relatives de joints filetés en terme de pression de contact intégrée sur la largeur de contact. Cette étude a pour but de comparer, relativement à un joint fileté simple de référence (cas 1), les différentes réalisations selon l'invention adaptées sur ce joint fileté simple. Le joint pris en référence est un joint fileté de diamètre externe 152,4 mm (6 pouces) et de poids métrique 27,8 kg/m (18,6 1b/ft) en acier AISI 420 (13% Cr) dans la désignation américaine (correspond à la désignation européenne X20Cr13) traités pour le grade API L80 (API = American Petroleum Institute) correspondant à la limite élastique minimale de 551 MPa.

Les tableaux 1 et 2 concernent respectivement les résultats d'étanchéité extérieure et intérieure en pourcentage pour chaque cas considéré par rapport à l'étanchéité intérieure du cas de référence :
- cas 1 : joint fileté de référence,
- cas 2 : joint fileté de référence recouvert d'une manchette très longue fixée sur l'élément fileté mâle et recouvrant le filetage et les lèvres mâle et femelle, d'épaisseur 4,5 mm, en acier identique à celui du joint fileté (13% Cr) et traité identiquement au joint (API L80)
- cas 3 : joint fileté de référence muni de deux manchettes courtes selon la présente invention (figure 8) de même épaisseur, matériau et traitement que dans le cas précédent,
- cas 4 : le même que le cas 3 mais comportant une seule manchette disposée au niveau de la lèvre femelle, très mince (épaisseur 1,6 mm) et collée sur l'élément femelle au niveau de sa saillie radiale,
- cas 5 : le même que le cas 4 mais comportant une manchette traitée pour un grade API P 110 (correspondant à la limite élastique Rp 0,2 ≥ 758 Mpa)

Dans le cas 1, l'étanchéité intérieure est excellente mais l'étanchéité extérieure est plus faible (44% de l'étanchéité intérieure). Une manchette longue (cas 2.) n'améliore que l'étanchéité intérieure. L'utilisation de deux manchettes courtes (cas 3) d'épaisseur similaire au cas 2 améliore à la fois l'étanchéité extérieure et intérieure. En diminuant fortement l'épaisseur (cas 4), il est possible de conserver une étanchéité extérieure suffisante (seule étudiée). L'augmentation du grade de la manchette, et donc de la limite d'élasticité, (cas 5) permet d'augmenter l'étanchéité extérieure qui atteint quasiment le niveau de l'étanchéité du cas de référence.

Le pic d'effort (non indiqué ici) généré par la présence de manchette pour l'expansion diamétrale et l'énergie d'expansion sont très limités.

Pour un élément tubulaire présentant les deux zones d'étanchéité intérieur et extérieur, une variante de réalisation de manchette tubulaire consiste en un pièce tubulaire de recouvrement 45 comme représentée sur la figure 11 comprenant les manchettes 34 et 36 de la figure 8 reliées entre elles par une entretoise tubulaire 46. Cette entretoise tubulaire 46 est d'épaisseur radiale beaucoup plus faible que celle des manchettes 34 et 36 de façon à pratiquement pas s'opposer à la force d'expansion diamétrale sur toute la longueur de l'entretoise 46.

Les différentes méthodes de montage de cette pièce de recouvrement sont les mêmes que pour la manchette tubulaire 34 seule.

L'invention s'applique soit à des joints ne présentant que la zone d'étanchéité intérieure, soit à des joins ne présentant que la zone d'étanchéité extérieure, soit à des joints présentant l'une et l'autre des zones d'étanchéité. L'invention peut s'adapter à des joints présentant d'autres zones d'étanchéité comme des zones d'étanchéité intermédiaires par exemple.

### Annexe I

**Tableau 1**

| Numéro de cas | 1 | 2 | 3 | 4 | 5 |
|---|---|---|---|---|---|
| étanchéité extérieure (en % par rapport à l'étanchéité intérieure du cas 1) | 44 | 42 | 158 | 89 | 99 |

**Tableau 2**

| Numéro de cas | 1 | 2 | 3 |
|---|---|---|---|
| étanchéité intérieure (en % par rapport à l'étanchéité intérieure du cas 1) | 100 | 220 | 201 |

## Revendications

1. Joint tubulaire fileté de hautes performances comprenant un premier élément tubulaire mâle (11) et un second élément tubulaire femelle (12) propres à être mutuellement assemblés par vissage de filetages respectifs conjugués, l'un au moins des premier et second éléments tubulaires (11;12) comportant une lèvre non filetée (38;5) s'étendant entre son filetage et son extrémité libre et présentant une surface d'étanchéité (40;7) propre à être en contact étanche avec la surface en regard (41;8) de l'autre élément après vissage, expansion diamétrale puis génération de forces de retour élastique des premier et second éléments tubulaires, **caractérisé en ce qu'**il comprend une manchette tubulaire (34;36) propre à être enfilée avant vissage sur le second élément (12), à être positionnée pour s'étendre axialement essentiellement en regard de ladite lèvre (3;5) et, après expansion diamétrale, à engendrer une force de retour élastique qui s'ajoute à celle du second élément pour contrarier la force de retour élastique du premier élément en réalisant de ce fait au moins le frettage du second élément par la manchette tubulaire.

2. Joint tubulaire selon la revendication 1, **caractérisé en ce que** la lèvre non filetée (5) du premier élément comprend une languette en extrémité propre à être engagée en butée axiale dans une rainure correspondante du second élément après vissage et avant expansion, la lèvre non filetée étant propre à être maintenue par la languette dans la rainure durant l'expansion diamétrale.

3. Joint tubulaire selon l'une des revendications précédentes, **caractérisé en ce que** la surface d'étanchéité de la lèvre et la surface en regard sont cylindriques et sont disposées à faible jeu l'une de l'autre après vissage et avant expansion diamétrale.

4. Joint tubulaire selon la revendication 1, **caractérisé en que** la surface d'étanchéité de la lèvre et la surface en regard sont propres à interférer radialement l'une contre l'autre après vissage et avant expansion diamétrale.

5. Joint tubulaire selon l'une des revendications précédentes, **caractérisé en ce que** chacun des premier et second éléments tubulaires (11, 12) comporte une lèvre non filetée (38,5) s'étendant entre son filetage et son extrémité libre et présentant une surface d'étanchéité (40,7) propre à être en contact étanche avec la surface en regard (41,8) de l'autre élément après vissage, expansion diamétrale, puis génération de forces de retour élastique des premier et second éléments tubulaires et **en ce qu'**il comprend deux manchettes tubulaires (34,36) propres à être enfilées avant vissage sur le second élément (12), à être positionnées pour s'étendre axialement essentiellement en regard desdites lèvres (38,5) respectivement et à engendrer une force de retour élastique qui s'ajoute à celle du second élément pour contrarier la force de retour élastique du premier élément en réalisant de ce fait au moins le frettage du second élément par la manchette tubulaire.

6. Joint tubulaire selon la revendication 5, **caractérisé en ce que** les deux manchettes (34,36) sont reliées entre elles par une entretoise (46) ayant une section transversale inférieure à celle des manchettes, les manchettes et l'entretoise étant réalisées en une seule pièce (46).

7. Joint tubulaire selon la revendication 6, **caractérisé en ce que** l'entretoise tubulaire (45) présente une épaisseur radiale inférieure à celle des manchettes.

8. Joint tubulaire selon l'une des revendications précédentes, **caractérisé en ce que** chaque manchette tubulaire (34;36) a une longueur de recouvrement (1m2;1m1) environ égale à la longueur de la lèvre en regard optionnellement additionnée d'au plus 8 pas desdits filetages.

9. Joint tubulaire selon la revendication 8, **caractérisé en ce que** chaque manchette (34;36) est centrée sur la lèvre en regard (38,5).

10. Joint tubulaire selon l'une des revendications précédentes, **caractérisé en ce que** la manchette tubulaire (34) s'étendant en regard de la lèvre (38) du second élément comprend une saillie radiale (42) propre à venir au contact d'une surface radiale (39) située à l'extrémité du second élément (12) et propre à faciliter le positionnement de la manchette tubulaire (34).

11. Joint tubulaire selon l'une des revendications précédentes, **caractérisé en ce que** la manchette tubulaire (34; 36) est maintenue en position par rapport au second élément (12) par collage d'au moins une partie des surfaces du second élément et de la manchette en regard.

12. Joint tubulaire selon l'une des revendications précédentes, **caractérisé en ce que** la manchette tubulaire (34;36) est positionnée axialement sur le second élément (12) au moyen d'un frettage au moins par refroidissement du second élément (12).

13. Joint tubulaire selon l'une des revendications précédentes, **caractérisé en ce que** la manchette tubulaire (34;36) est positionnée axialement sur le second élément (12) au moyen d'un frettage au moins par chauffage de la manchette tubulaire.

14. Joint tubulaire selon l'une des revendications précédentes, **caractérisé en ce que** le second élément (12) comprend une marque située sur sa surface périphérique extérieure (37) et propre à faciliter le positionnement de la manchette tubulaire.

15. Joint tubulaire selon la revendication 14, **caractérisé en ce que** la marque est une gorge peu profonde effectuée sur le second élément (12).

16. Joint tubulaire selon l'une des revendications précédentes, **caractérisé en ce que** l'épaisseur radiale de la manchette tubulaire est au moins égale à 1,5 mm.

17. Joint tubulaire selon l'une des revendications précédentes, **caractérisé en ce que** le matériau de la manchette tubulaire possède une limite élastique supérieure à la limite élastique du matériau des premier et second éléments.

18. Joint tubulaire selon l'une des revendications précédentes, **caractérisé en ce que** la limité élastique du matériau de la manchette tubulaire est réglée par traitement thermique.

19. Procédé de réalisation d'un joint fileté tubulaire étanche **caractérisé en ce que** l'on part d'un joint fileté tubulaire selon l'une quelconque des revendications précédentes dit "joint fileté tubulaire initial" et **en ce qu'**on fait subir à ce joint fileté initial une expansion diamétrale dans le domaine des déformations plastiques à l'aide d'un boulet d'expansion (30) de diamètre supérieur au diamètre intérieur (DI) desdits éléments tubulaires, qui est déplacé axialement dans le joint fileté, la ou chaque manchette engendrant, après expansion, une force de retour élastique qui s'ajoute à celle du second élément dans la région qu'elle recouvre.

20. Joint tubulaire étanche de hautes performances tel qu'on peut l'obtenir par le procédé selon la revendication 19, comprenant un premier élément tubulaire mâle (1) et un second élément tubulaire femelle (2) mutuellement assemblés par vissage de filetages respectifs conjugués, l'un au moins des premier et second éléments tubulaires (11;12) comportant une lèvre non filetée (38;5) s'étendant entre son filetage et son extrémité libre et présentant une surface d'étanchéité (40;7) en contact étanche avec la surface en regard (41;8) de l'autre élément, le joint comprenant en outre une manchette tubulaire entourant avec serrage le second élément et s'étendant axialement essentiellement en regard de ladite lèvre.

## Claims

1. High-performance threaded tubular joint comprising a first, male tubular element (11) and a second, female tubular element (12) capable of being assembled together by the screwing together of respective mating threads, one at least of the first and second tubular elements (11; 12) having a non-threaded lip (38; 5) extending between its thread and its free end and having a sealing face (40; 7) capable of being in sealing-tight contact with the opposite face (41; 8) of the other element after screwing together, diametric expansion, followed by the generation of springback forces of the first and second tubular elements, **characterised in that** it comprises a tubular sleeve (34; 36) capable of being threaded over the second element (12) before screwing together, of being positioned so as to extend axially substantially opposite the lip (3; 5) and, after diametric expansion, of generating a springback force which is added to that of the second element to counteract the springback force of the first element, thus effecting at least shrink-fitting of the tubular sleeve over the second element.

2. Tubular joint according to claim 1, **characterised in that** the non-threaded lip (5) of the first element has a tongue at the end capable of engaging in an axially flush manner in a corresponding groove of the second element after screwing together and before expansion, the non-threaded lip being capable of being held by the tongue in the groove during diametric expansion.

3. Tubular joint according to one of the preceding claims, **characterised in that** the sealing face of the lip and the opposite face are cylindrical and are disposed with slight clearance from one another after screwing together and before diametric expansion.

4. Tubular joint according to claim 1, **characterised in that** the sealing face of the lip and the opposite face are capable of interfering radially one with another after screwing together and before diametric expansion.

5. Tubular joint according to one of the preceding claims, **characterised in that** each of the first and second tubular elements (11, 12) comprises a non-threaded lip (38, 5) extending between its thread and its free end and having a sealing face (40, 7) capable of being in sealing-tight contact with the opposite face (41, 8) of the other element after screwing together and diametric expansion, followed by generation of springback forces of the first and second tubular elements, and **in that** it comprises two tubular sleeves (34, 36) capable of being threaded on to the second element (12) before screwing together, of being positioned in order to extend axially substantially opposite to the lips (38, 5) respectively, and of generating a springback force which is added to that of the second element in order to counteract the resilient restoring force of the first element, thus effecting at least the shrink-fitting of the tubular sleeve over the second element.

6. Tubular joint according to claim 5, **characterised in that** the two sleeves (34, 36) are connected together by a brace (46) having a cross-section smaller than that of the sleeves, the sleeves and the brace being formed in one piece (46).

7. Tubular joint according to claim 6, **characterised in that** the tubular brace (46) has a radial thickness smaller than that of the sleeves.

8. Tubular joint according to one of the preceding claims, **characterised in that** each tubular sleeve (34; 36) has an overlap length (1m2; 1m1) roughly equal to the length of the lip opposite, optionally with the addition of at least 8 turns of the threads.

9. Tubular joint according to claim 8, **characterised in that** each sleeve (34; 36) is centred on the lip opposite (38, 5) .

10. Tubular joint according to one of the preceding claims, **characterised in that** the tubular sleeve (34) extending opposite to the lip (38) of the second element has a radial projection (42) capable of coming into contact with a radial face (39) disposed at the end of the second element (12) and capable of facilitating the positioning of the tubular sleeve (34).

11. Tubular joint according to one of the preceding claims, **characterised in that** the tubular sleeve (34; 36) is held in position relative to the second element (12) by adhesion of at least some of the surfaces of the second element and of the sleeve opposite.

12. Tubular joint according to one of the preceding claims, **characterised in that** the tubular sleeve (34; 36) is positioned axially on the second element (12) by means of shrink-fitting at least by cooling of the second element (12).

13. Tubular joint according to one of the preceding claims, **characterised in that** the tubular sleeve (34; 36) is positioned axially on the second element (12) by means of shrink-fitting at least by heating of the tubular sleeve.

14. Tubular joint according to one of the preceding claims, **characterised in that** the second element (12) has a mark which is disposed on its external peripheral surface (37) and which is capable of facilitating positioning of the tubular sleeve.

15. Tubular joint according to claim 14, **characterised in that** the mark is a shallow groove formed in the second element (12).

16. Tubular joint according to one of the preceding claims, **characterised in that** the radial thickness of the tubular sleeve is at least equal to 1.5 mm.

17. Tubular joint according to one of the preceding claims, **characterised in that** the material of the tubular sleeve has a yield strength higher than the yield strength of the material of the first and second elements.

18. Tubular joint according to one of the preceding claims, **characterised in that** the yield strength of the material of the tubular sleeve is adjusted by heat treatment.

19. Method of forming a threaded tubular joint, **characterised in that** one starts off with a tubular threaded joint according to one of the preceding claims, known as an "initial tubular threaded joint", and **in that** this initial threaded joint is subjected to diametric expansion in the sense of plastic deformation by means of an expansion ball (30) of a diameter greater than the inner diameter (DI) of the tubular elements, which is moved axially in the threaded joint in the region where each sleeve generates, after expansion, a springback force which is added to that of the second element in the region covered thereby.

20. High-performance tubular joint such as may be obtained by the method according to claim 19, comprising a first, male tubular element (1) and a second, female tubular element (2) assembled together by the screwing together of respective mating threads, one at least of the first and second tubular elements (11; 12) having a non-threaded lip (38; 5) extending between its thread and its free end and having a sealing face (40; 7) capable of being in sealing-tight contact with the opposite face (41; 8) of the other, the joint further comprising a tubular sleeve tightly surrounding the second element and extending axially substantially opposite to the lip.

## Patentansprüche

1. Verstärkte, verschraubte Rohrverbindung, enthaltend ein erstes Rohreinschraubelement und ein zweites Rohraufnahmeelement (12), die dazu geeignet sind, durch Verschrauben zueinander passender Gewinde zusammengefügt zu werden, wobei wenigstens eines der ersten und zweiten Rohrelemente (11; 12) eine gewindefreie Lippe (38; 5) aufweist, die sich zwischen seinem Gewinde und dem freien Ende erstreckt und eine Dichtfläche (40; 7) aufweist, die dazu geeignet ist, mit der gegenüberliegende Oberfläche des anderen Elements nach Verschraubung, diametraler Aufweitung und anschließender Erzeugung elastischer Rückstellkräfte der ersten und zweiten Rohrelemente in Dichtkontakt zu sein, **dadurch gekennzeichnet, dass** sie eine rohrförmige Manschette (34; 36) aufweist, die dazu geeignet ist, vor der Verschraubung auf das zweite Element (12) geschoben zu werden und so positioniert zu werden, dass sie sich axial im Wesentlichen gegenüber der genannten Lippe (3; 5) erstreckt, und nach diametraler Aufweitung eine elastische Rückstellkraft zu erzeugen, die sich zu der des zweiten Elements hinzufügt, um der elastischen Rückstellkraft des ersten Elements zu widerstehen, wobei auf diese Weise wenigstens die Bandagierung des zweiten Elements mit der rohrförmigen Manschette realisiert wird.

2. Rohrverbindung nach Anspruch 1, **dadurch gekennzeichnet, dass** die gewindefreie Lippe (5) des ersten Elements eine Zunge am Ende aufweist, die dazu eingerichtet ist, in eine passende axiale Nut des zweiten Elements nach Verschraubung und vor Aufweitung bis zum Anschlag eingeführt zu werden, wobei die gewindefreie Lippe dazu eingerichtet ist, während der diametralen Aufweitung durch die Zunge in der Nut gehalten zu werden.

3. Rohrverbindung nach einem der vorhergehenden Ansprüche, **dadurch gekennzeichnet, dass** die Dichtfläche der Lippe und die ihr gegenüberliegende Oberfläche zylindrisch sind und mit geringem gegenseitigen Spiel nach Verschraubung und vor diametraler Aufweitung angeordnet sind.

4. Rohrverbindung nach Anspruch 1, **dadurch gekennzeichnet, dass** die Dichtfläche der Lippe und die ihr gegenüberliegende Oberfläche dazu eingerichtet sind, sich nach Verschraubung und vor diametraler Aufweitung radial einander zu überlagern.

5. Rohrverbindung nach einem der vorhergehenden Ansprüche, **dadurch gekennzeichnet, dass** jedes der ersten und zweiten Rohrelemente (11, 12) eine gewindefreie Lippe (38, 5) aufweist, die sich zwischen seinem Gewinde und seinem freien Ende erstreckt und eine Dichtfläche (40, 7) aufweist, die dazu geeignet ist, mit der gegenüberliegenden Oberfläche (41, 8) des anderen Elements nach Verschraubung, diametraler Aufweitung und anschließender Erzeugung elastischer Rückstellkräfte der ersten und zweiten Rohrelemente in Dichtkontakt zu sein, und dass sie zwei rohrförmige Manschetten (34, 36) aufweist, die dazu geeignet sind, vor Verschraubung auf das zweite Element (12) geschoben zu werden, um so positioniert zu werden, dass sie sich im Wesentlichen axial gegenüber den jeweiligen Lippen (38, 5) erstrecken und eine elastische Rückstellkraft zu erzeugen, die sich zu jener des zweiten Elements hinzufügt, um der elastischen Rückstellkraft des ersten Elements zu widerstehen, in dem sie auf diese Weise wenigstens die Bandagierung des zweiten Elements durch die rohrförmige Manschette realisieren.

6. Rohrverbindung nach Anspruch 5, **dadurch gekennzeichnet, dass** die zwei Manschetten (34, 36) miteinander durch ein Zwischenstück (46) verbunden sind, dass einen Querschnitt aufweist, der kleiner als der der Manschetten ist, wobei die Manschetten und das Zwischenstück aus einem einzigen Teil (46) bestehen.

7. Rohrverbindung nach Anspruch 6, **dadurch gekennzeichnet, dass** das rohrförmige Zwischenstück (46) eine radiale Dicke aufweist, die kleiner als die der Manschetten ist.

8. Rohrverbindung nach einem der vorhergehenden Ansprüche, **dadurch gekennzeichnet, dass** jede rohrförmige Manschette (34; 36) eine Bedeckungslänge (1m2; Im1) aufweist, die etwa gleich der Länge der gegenüberliegenden Lippe, gegebenenfalls vergrößert um höchstens acht Gänge der genannten Gewinde, ist.

9. Rohrverbindung nach Anspruch 8, **dadurch gekennzeichnet, dass** jede Manschette (34, 36) auf die gegenüberliegende Lippe (38, 5) zentriert ist.

10. Rohrverbindung nach einem der vorhergehenden Ansprüche, **dadurch gekennzeichnet, dass** die rohrförmige Manschette (34), die sich gegenüber der Lippe (38) des zweiten Elements erstreckt, einen radialen Vorsprung (42) aufweist, der dazu geeignet ist, mit einer Radialfläche (39) in Berührung zu gelangen, die am Ende des zweiten Elements (12) gelegen und dazu eingerichtet ist, die Positionierung der rohrförmigen Manschette (34) zu erleichtern.

11. Rohrverbindung nach einem der vorhergehenden Ansprüche, **dadurch gekennzeichnet, dass** die rohrförmige Manschette (34; 36) gegenüber dem zweiten Element (12) durch Verklebung wenigstens eines Teils der Oberflächen des zweiten Elements und der gegenüber liegenden Manschette in Position gehalten ist.

12. Rohrverbindung nach einem der vorhergehenden Ansprüche, **dadurch gekennzeichnet, dass** die rohrförmige Manschette (34; 36) auf dem zweiten Element (12) mittels einer Bandagierung wenigstens durch Kühlung des zweiten Elements (12) axial positioniert ist.

13. Rohrverbindung nach einem der vorhergehenden Ansprüche, **dadurch gekennzeichnet, dass** die rohrförmige Manschette (34; 36) auf dem zweiten Element (12) mittels einer Bandagierung wenigstens durch Erwärmung der rohrförmigen Manschette axial positioniert ist.

14. Rohrverbindung nach einem der vorhergehenden Ansprüche, **dadurch gekennzeichnet, dass** das zweite Element (12) eine Markierung aufweist, die auf der Außenumfangsfläche (37) gelegen und dazu eingerichtet ist, die Positionierung der rohrförmigen Manschette zu erleichtern.

15. Rohrverbindung nach Anspruch 14, **dadurch gekennzeichnet, dass** die Markierung eine Hohlkehle geringer Tiefe ist, die in dem zweiten Element (12) ausgebildet ist.

16. Rohrverbindung nach einem der vorhergehenden Ansprüche, **dadurch gekennzeichnet, dass** die radiale Dicke der rohrförmigen Manschette wenigstens gleich 1,5 mm ist.

17. Rohrverbindung nach einem der Vorhergehenden Ansprüche, **dadurch gekennzeichnet, dass** das Material der rohrförmigen Manschette eine Elastizitätsgrenze hat, die höher als die Elastizitätsgrenze des Materials des ersten und zweiten Elemente liegt.

18. Rohrverbindung nach einem der vorhergehenden Ansprüche, dass die Elastizitätsgrenze des Materials der rohrförmigen Manschette durch Wärmebehandlung eingestellt ist.

19. Verfahren zum Erstellen einer dichten, geschraubten Rohrverbindung, **dadurch gekennzeichnet, dass** man von einer geschraubten Rohrverbindung nach einem der vorhergehenden Ansprüche, einer sogenannten "ursprünglichen geschraubten Rohrverbindung" ausgeht und dass man an dieser ursprünglichen Schraubverbindung eine diametrale Aufweitung im Bereich plastischer Verformungen mit Hilfe einer Expansionskugel (30) eines gegenüber dem Innendurchmesser (DI) der rohrförmigen Elemente größeren Durchmessers ausführt, die axial in die Schraubverbindung bewegt wird, wobei die oder jede Manschette nach Aufweitung eine elastische Rückstellkraft erzeugt, die sich zu der des zweiten Elements in dem Bereich, den sie bedeckt, hinzufügt.

20. Verstärkte dichte Rohrverbindung, die man durch das Verfahren nach Anspruch 19 erhalten kann, enthaltend ein erstes Einschraubrohrelement (1) und ein zweites aufnehmendes Rohrelement (2), die durch Verschraubung zueinander passender Gewinde zusammengefügt sind, wobei wenigstens eines der ersten und zweiten Rohrelemente (11; 12) eine gewindefreie Lippe (38; 5) aufweist, die sich zwischen seinem Gewinde und seinem freien Ende erstreckt und eine Dichtfläche (40; 7) aufweist, die mit einer gegenüberliegenden Oberfläche des anderen Elements in Dichtkontakt ist, wobei die Verbindung weiterhin eine rohrförmige Manschette aufweist, die das zweite Element mit Spannung umgibt und sich axial im Wesentlichen gegenüber der Lippe erstreckt.
